# EUROPÄISCHE PATENTSCHRIFT

(11) **EP 2 361 720 B1**
(45) Veröffentlichungstag und Bekanntmachung des Hinweises auf die Patenterteilung: **12.12.2012**
(21) Anmeldenummer: 11154008.4
(22) Anmeldetag: 10.02.2011
(51) Int. Cl.: B23P 6/00, F01D 5/00

(54) **Verfahren zum Reparieren und/oder Überarbeiten eines Bauteils, insbesondere einer Gasturbine**
Method for repairing and/or upgrading a component, especially of a gas turbine
Procédé de réparation et/ou de traitement d'un composant, notamment d'une turbine à gaz

(30) Priorität: 22.02.2010 US 306661 P
(43) Veröffentlichungstag der Anmeldung: 31.08.2011
(73) Patentinhaber: Alstom Technology Ltd, 5400 Baden (CH)
(72) Erfinder: Stankowski, Alexander, 5303 Würenlingen (CH); Rickenbacher, Lukas Emanuel, 4053 Basel (CH); Hövel, Simone, 5408 Enntebaden (CH)

(56) Entgegenhaltungen:
- WO-A1-2004/096487
- WO-A1-2008/135656
- JP-A- 2007 278 995
- US-A- 5 269 057
- US-A1- 2003 105 538

## Beschreibung

### TECHNISCHES GEBIET

Die vorliegende Erfindung bezieht sich auf das Gebiet der Bearbeitung von fertigen Bauteilen, welche modular gebaut sind oder monolithische oder hybride Bauteile sind. Sie betrifft ein Verfahren zum Reparieren und/oder Überarbeiten eines derartigen Bauteils, insbesondere einer Gasturbine gemäss dem Oberbegriff des Anspruchs 1.

### STAND DER TECHNIK

Gasturbinen haben heutzutage aus Gründen eines guten Wirkungsgrades Betriebstemperaturen im Heissgasbereich von über 1400 °C. Es ist daher nicht verwunderlich, dass eine Vielzahl von Bauteilen der Gasturbinen, wie zum Beispiel Laufschaufeln, Leitschaufeln oder Brennkammerauskleidungen, grossen thermischen aber auch mechanischen Belastungen ausgesetzt sind. Da diese Bauteile üblicherweise aus teuren Hochtemperaturmaterialien hergestellt sind, ist es wünschenswert, sie zu reparieren, anstatt sie vollständig zu ersetzen, wenn sie beschädigt sind. Darüber hinaus besteht häufig das Bedürfnis, bereits eingebaute Bauteile zu überarbeiten (Upgrade), um sie in ihrer Wirkungsweise zu verbessern oder an sich ändernde Betriebsbedingungen anzupassen.

Aus der Druckschrift US 5,269,057 ist ein Verfahren bekannt, um Teile von Turbinenschaufeln zu ersetzen. Bei diesem bekannten Verfahren wird ein zu ersetzender Bereich der Schaufel identifiziert und dann durch einen nichtkonventionellen Bearbeitungsprozess entfernt. Auf dieselbe Weise wird ein Ersatzstück hergestellt, wobei Eingriffselemente vorgesehen werden, mit denen das Ersatzstück formschlüssig an der Schaufel gehalten wird. Die Teile werden dann stoffschlüssig miteinander verbunden. Für das Ausschneiden des zu ersetzenden Bereiches und des Ersatzstücks wird vorzugsweise ein und dasselbe CNC-Programm für den Betrieb einer Funkenerosions-Maschine eingesetzt.

In der Druckschrift EP 1 620 225 B1 (WO 2004 096487), die dem nächstliegenden Stand der Technik entspricht, ist ein Verfahren zur Reparatur und/oder Modifikation von Bauteilen einer Gasturbine offenbart, bei dem zuerst zumindest ein Abschnitt des zu reparierenden oder zu modifizierenden Bauteils aus dem Bauteil herausgearbeitet, insbesondere herausgetrennt wird. Anschliessend wird zumindest bei der ersten Reparatur oder Modifikation dieses Abschnitts des Bauteils ein Datensatz für ein herzustellendes Ersatzteil erzeugt. Das Ersatzteil wird darauffolgend mit Hilfe eines Rapid-Manufacturing-Prozesses hergestellt.

Nach oder auch vor dem Herausarbeiten, insbesondere Heraustrennen, des insbesondere beschädigten Abschnitts sowie ggf. eines sich an den beschädigten Abschnitt anschliessenden Toleranzabschnitts aus dem zu reparierenden Bauteil, wird ein Datensatz für das herzustellende Ersatzteil erzeugt. In diesem Zusammenhang wird zuerst ein dreidimensionaler CAD-Datensatz für das herzustellende Ersatzteil erzeugt. Dieser 3D-CAD-Datensatz für das herzustellende Ersatzteil wird anschliessend in einen Maschinendatensatz umgewandelt. Zuerst wird überprüft, ob ein 3D-CAD-Datensatz für das zu reparierende oder zu modifizierende, jedoch unbeschädigte Bauteil bzw. ein entsprechendes Neuteil vorliegt. Liegt ein solcher 3D-CAD-Datensatz für das unbeschädigte Bauteil vor, so wird anschliessend überprüft, ob erstens eine systematische Beschädigung des Bauteils vorliegt und ob zweitens die Geometrie des beschädigten Bauteils reproduzierbar ist. In dem Fall, in dem sowohl eine systematische Beschädigung des Bauteils vorliegt, als auch gleichzeitig die Geometrie des beschädigten Bauteils reproduzierbar ist, kann anhand statistischer Auswertungen der Grösse des beschädigten Abschnitts des zu reparierenden Bauteils sowie unter Berücksichtung eines sich an den beschädigten Abschnitt anschliessenden Toleranzabschnitts, der vorgeschädigte Werkstoffbereiche sowie stark beanspruchte Bereiche des Bauteils bei der Reparatur berücksichtigt, die erforderliche Geometrie des herzustellenden Ersatzteils abgeleitet und daraus der 3D-CAD-Datensatz generiert werden.

Liegt hingegen keine systematische Beschädigung des zu reparierenden Bauteils vor und/oder ist die Geometrie des beschädigten oder zu modifizierenden Bauteils nicht reproduzierbar, so wird ein Reverse Engineering des Bauteils oder zumindest der relevanten Bauteilbereiche durchgeführt. Zur Durchführung des Reverse Engineerings des Bauteils oder Bauteilbereichs wird zuerst der insbesondere beschädigte Abschnitt sowie ggf. zusätzlich der sich an den beschädigten Abschnitt anschliessende Toleranzabschnitt aus dem beschädigten, zu reparierenden Bauteil herausgearbeitet. Anschliessend erfolgt eine Vermessung des Bauteils oder Bauteilbereichs, z. B. durch mechanische oder optische Messwertaufnehmer oder durch Computertomografie und anschliessende Flächenrückführung. Als Ergebnis erhält man einen 3D-CAD-Datensatz des beschädigten oder zu modifizierenden Bauteils oder Bauteilbereichs, aus dem zuvor der beschädigte Abschnitt und ggf. ein Toleranzabschnitt herausgearbeitet worden sind. Aus diesem 3D-CAD-Datensatz des bearbeiteten Bauteils oder Bauteilbereichs wird durch Differenzbildung mit dem 3D-CAD-Datensatz des unbeschädigten Bauteils der 3D-CAD-Datensatz des herzustellenden Ersatzteils ermittelt.

Ein solches Reverse Engineering ist jedoch insgesamt sehr aufwändig.

### DARSTELLUNG DER ERFINDUNG

Es ist daher eine Aufgabe der Erfindung, ein Verfahren der eingangs genannten Art so auszugestalten, dass die Nachteile der bisher bekannten Verfahren vermieden werden und eine Reparatur beziehungsweise Überarbeitung des Bauteils auf besonders einfache und kostengünstige Weise erfolgen kann.

Die Aufgabe wird durch die Gesamtheit der Merkmale des Anspruchs 1 gelöst. Das erfindungsgemässe Verfahren zeichnet sich dadurch aus, dass ein erstes nominales CAD-Modell des nicht-deformierten Bauteils bereitgestellt wird, dass das deformierte Bauteil vermessen wird, dass das erste CAD-Modell mithilfe der am deformierten Bauteil ermittelten Daten durch Morphing in ein zweites CAD-Modell des deformierten Bauteils überführt wird, dass im zweiten CAD-Modell eine Schnittlinie festgelegt wird, welche in dem Bauteil einen Ausschnitt bestimmt, sowie ein in den Ausschnitt einsetzbares Einsatzstück, dass nach Massgabe der Schnittlinie ein Ausschnitt in das Bauteil eingebracht wird, dass nach Massgabe der Schnittlinie ein Einsatzstück zum Einsetzen in den Ausschnitt angefertigt wird, dass das angefertigte Einsatzstück in den Ausschnitt eingesetzt wird, und dass das eingesetzte Einsatzstück mit dem Bauteil stoffschlüssig verbunden wird.

Eine Ausgestaltung des Verfahrens nach der Erfindung ist dadurch gekennzeichnet, dass das Bauteil eine Beschädigung und/oder einen für ein Upgrade vorgesehenen Bereich aufweist, und dass die Beschädigung bzw. der für das Upgrade vorgesehene Bereich mit dem Einbringen des Ausschnittes in das Bauteil aus dem Bauteil entfernt wird.

Eine andere Ausgestaltung der Erfindung ist dadurch gekennzeichnet, dass das deformierte Bauteil in seiner Gesamtheit durch ein zerstörungsfreies Verfahren vermessen wird.

Insbesondere wird dabei das deformierte Bauteil in einem dreidimensionalen äusserlichen Abtastprozess mechanisch und/oder optisch abgetastet.

Vorzugsweise wird auch die innere Struktur des deformierten Bauteils, insbesondere durch CT- oder Ultraschall-Verfahren, zerstörungsfrei abgetastet oder anhand von wenigen Referenzpunkten ermittelt, wobei das zweite CAD-Modell neben der Deformation der äusseren Kontur des Bauteils auch Deformationen der inneren Struktur des Bauteils sowie Deformationen allfälliger Kühllöcher berücksichtigt.

Insbesondere berücksichtigt dabei das zweite CAD-Modell zusätzlich auch Änderungen durch Materialverlust, insbesondere Änderungen der Dicke von Wänden im Bauteil.

Eine weitere Ausgestaltung des erfindungsgemässen Verfahrens ist dadurch gekennzeichnet, dass der Ausschnitt durch ein maschinelles Bearbeitungsverfahren, insbesondere durch Funkenerodieren (EDM), in das Bauteil eingebracht wird.

Gemäss einer anderen Ausgestaltung weist das Einsatzstück eine von der Geometrie des aus dem Ausschnitt entfernten Teils abweichende Geometrie auf.

Eine weitere Ausgestaltung ist dadurch gekennzeichnet, dass in der Geometrie des Einsatzstückes alle zugehörigen inneren und äusseren Deformationen des Bauteils enthalten sind.

Eine andere Ausgestaltung des Verfahrens nach der Erfindung zeichnet sich dadurch aus, dass zur Anfertigung des Einsatzstückes auf der Basis der Schnittlinie ein CAD-Modell erstellt wird, und dass das Einsatzstück nach Massgabe des erstellten CAD-Modells, insbesondere durch Giessen, additive Fertigungsverfahren oder ein maschinelles Bearbeitungsverfahren wie Fräsen oder elektrochemische Bearbeitung, angefertigt wird.

Eine noch andere Ausgestaltung ist dadurch gekennzeichnet, dass das Einsatzstück an vorgegebenen Stellen mit Übermass angefertigt wird, und dass das Einsatzstück nach dem Anfertigen einer Nachbearbeitung unterzogen wird.

Eine wieder andere Ausgestaltung ist dadurch gekennzeichnet, dass das eingesetzte Einsatzstück durch automatisches oder manuelles Schweissen mit dem Bauteil stoffschlüssig verbunden wird.

Gemäss einer weiteren Ausgestaltung wird das eingesetzte Einsatzstück durch Hochtemperatur-Löten mit dem Bauteil stoffschlüssig verbunden.

Eine noch andere Ausgestaltung ist dadurch gekennzeichnet, dass das Bauteil nach dem Einsetzen und stoffschlüssigen Verbinden des Einsatzstückes hinsichtlich der äusseren Kontur nachbearbeitet wird.

### KURZE ERLÄUTERUNG DER FIGUREN

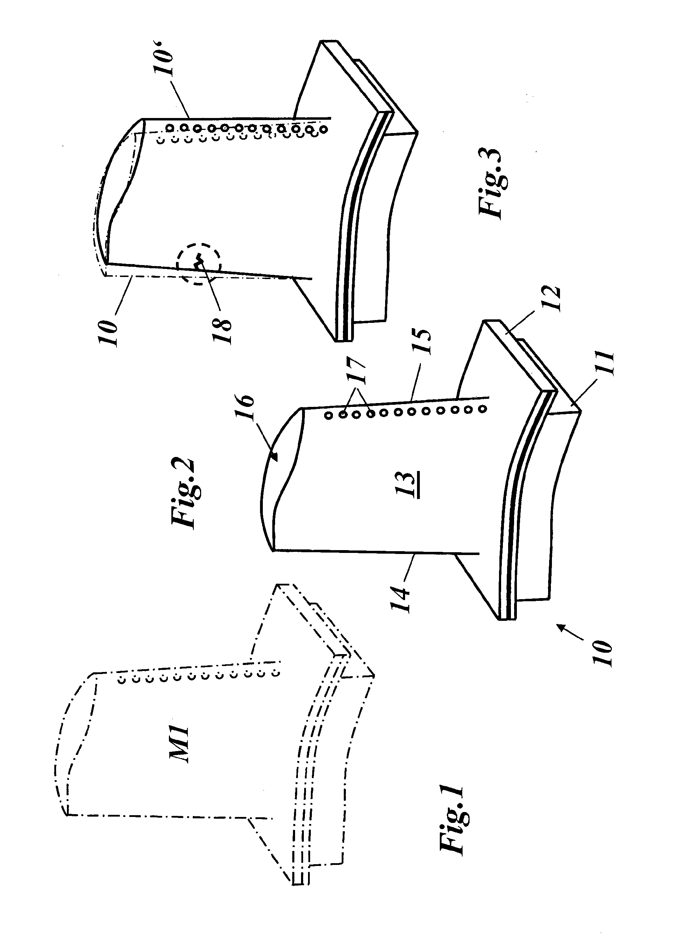

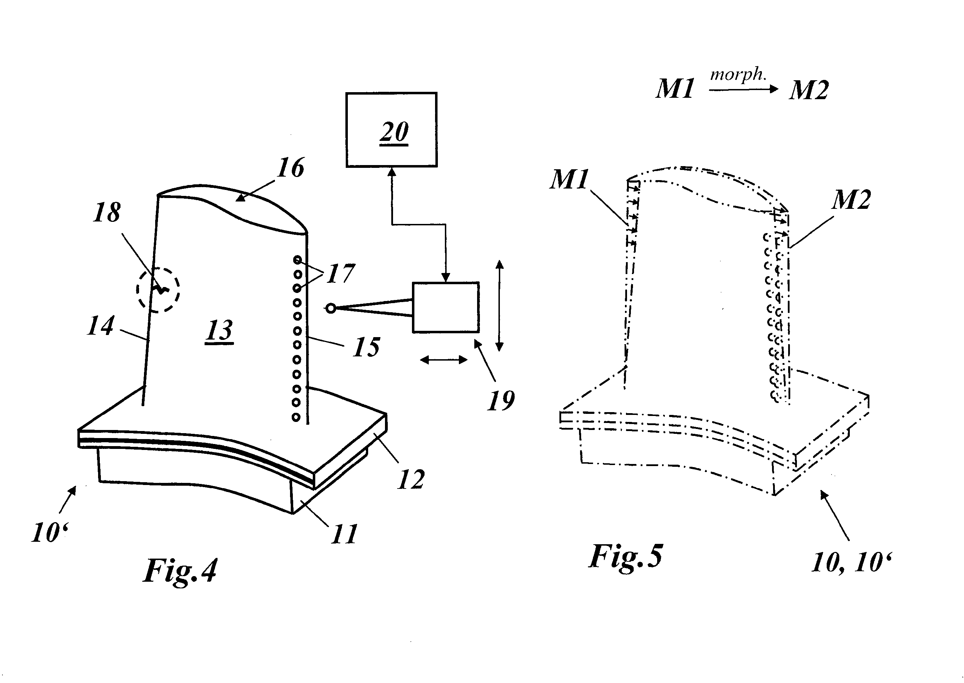

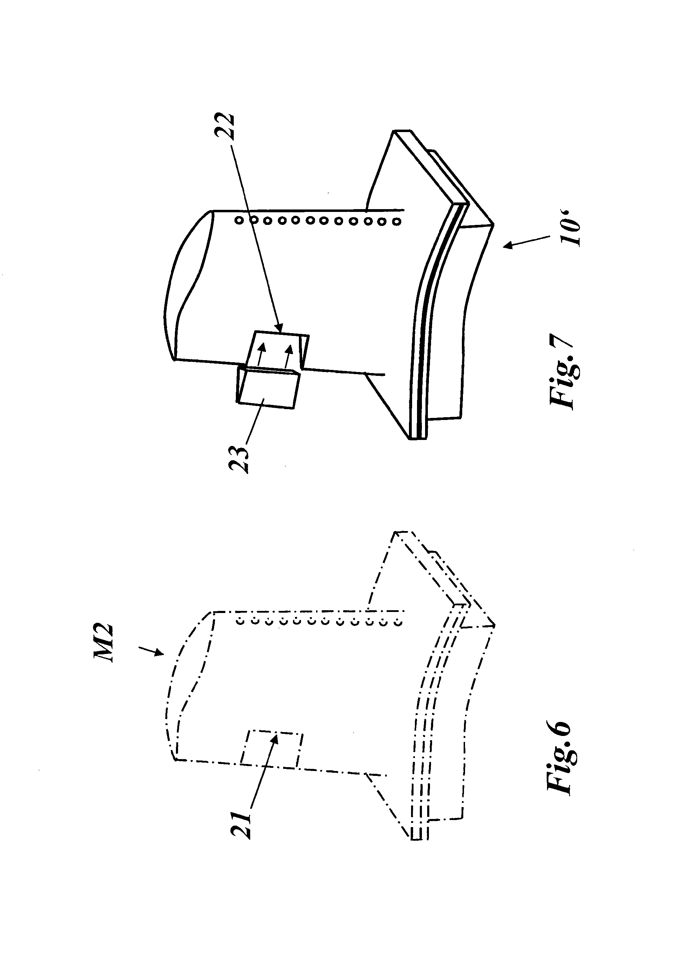

Die Erfindung soll nachfolgend anhand von Ausführungsbeispielen im Zusammenhang mit der Zeichnung näher erläutert werden. Es zeigen
- Fig. 1-7: verschiedene Schritte bei dem Verfahren zum Reparieren und/oder Überarbeiten eines Bauteils einer Gasturbine gemäss einem Ausführungsbeispiel der Erfindung, wobei ein neues Bauteil (Fig. 2) nach einem nominalen ersten CAD-Modell (Fig. 1) hergestellt wird, während ein beschädigtes und deformiertes Bauteil aus einer Gasturbine (Fig. 3) vermessen wird (Fig. 4), ein dazugehöriges zweites CAD-Modell mit den Messdaten durch Morphing aus dem nominalen CAD-Modell entwickelt wird (Fig. 5), auf der Grundlage dieses zweiten CAD-Modells ein Ausschnitt im Bauteil und ein passendes Einsatzstück definiert werden (Fig. 6), und schliesslich ein angefertigtes Einsatzstück in den ausgearbeiteten Ausschnitt eingesetzt wird (Fig. 7).

### WEGE ZUR AUSFÜHRUNG DER ERFINDUNG

Die Erfindung wird im Folgenden anhand einer Schaufel einer Gasturbine beispielhaft erläutert. In Fig. 2 ist in stark vereinfachter Form eine Schaufel 10 für eine Gasturbine dargestellt, die in an sich bekannter Weise einen Schaufelfuss 11, eine Plattform 12 und ein Schaufelblatt 13 aufweist. Das Schaufelblatt 13 hat eine Vorderkante 15 und eine Hinterkante 14 und läuft nach oben zu in einer Schaufelspitze 16 aus. Im dargestellten Beispiel sind im Bereich der Vorderkante 15 Kühllöcher 17 angeordnet, durch die im Inneren des Schaufelblattes 13 herangeführte Kühlluft austreten kann. Die Schaufel 10 der Fig. 2 ist nach einem nominalen ersten CAD-Modell hergestellt, dass mit strichpunktierten Linien und mit dem Bezugszeichen M1 in Fig. 1 schematisch wiedergegeben ist.

Ist die nach dem CAD-Modell M1 hergestellte Schaufel 10 längere Zeit an ihrem Einsatzort in einer Gasturbine im Einsatz gewesen, kann sie nicht nur Beschädigungen aufweisen, sondern auch aufgrund der thermischen und mechanischen Belastung im Betrieb deformiert sein. Die neue Schaufel 10 geht dann in eine beschädigte und deformierte Schaufel 10' über, die in Fig. 3 mit ihrer Abweichung von der ursprünglichen Form dargestellt ist. Eine beispielhafte Beschädigung 18 in Form eines Risses befindet sich dabei im Bereich der Hinterkante der Schaufel 10'.

Nach dem Ausbau aus der Gasturbine wird die deformierte und beschädigte Schaufel 10' gemäss Fig. 4 vermessen. Dies geschieht durch ein zerstörungsfreies Verfahren. Als Beispiel ist in Fig. 4 eine mechanische Abtastvorrichtung 19 mit einer Abtastspitze gezeigt, mit der die äussere Kontur der deformierten Schaufel 10' abgefahren wird. Eine angeschlossene Auswerteeinheit 20 wertet die Messergebnisse aus. Für diesen dreidimensionalen Abtastprozess kann anstelle der mechanischen Abtastvorrichtung 19 selbstverständlich auch eine geeignete optische Abtastvorrichtung eingesetzt werden. Mithilfe der Messergebnisse des Abtastprozesses wird aus dem nominalen CAD-Modell M1 durch so genanntes Morphing ein zweites CAD-Modell M2 erzeugt (siehe Fig. 5), welches der deformierten Schaufel 10' entspricht.

Das neu erzeugte CAD-Modell M2 schliesst die Deformationen der äusseren Kontur, der inneren Strukturen und der Kühllöcher 17 auf der Basis der vorher ermittelten Abtastdaten ein. Ein Materialverlust an der inneren Kontur oder der Einfluss einer Verschiebung des Schaufelkerns kann mittels zerstörungsfreier Messmethoden wie zum Beispiel Computer-Tomographie (CT) oder Ultraschallmessungen oder anhand von wenigen Referenzpunkten ermittelt werden. Daten aus derartigen Messungen können auch in das neu erzeugte CAD-Modell M2 der deformierten Schaufel 10' aufgenommen werden.

Im neu erzeugten CAD-Modell M2 kann nun eine vorbestimmte, frei wählbare Schnittlinie (21 in Fig. 6) eingetragen werden, um ein CAD-Modell der Geometrie eines entsprechenden anzufertigenden Einsatzstückes (23 in Fig. 7) zu erzeugen. Mit dieser Schnittlinie 21 wird gleichzeitig der Ausschnitt 22 (Fig. 7) festgelegt, der durch Entfernen des beschädigten Bereiches der Schaufel 10' entsteht. Dabei braucht für das Einsatzstück 23 kein zusätzliches Übermass vorgesehen zu werden, um einen Materialverlust beim maschinellen Ausarbeiten des Ausschnittes 22 auszugleichen. Die Schnittlinie kann - ähnlich wie bei der oben zitierten US 5,269,057 - komplex und insbesondere so ausgebildet sein, dass sich eine formschlüssige Verbindung zwischen Schaufel 10' und Einsatzstück 23 ergibt.

Das Ausarbeiten des Ausschnittes 22 erfolgt vorzugsweise durch einen maschinellen Bearbeitungsprozess wie zum Beispiel Funkenerodieren (EDM). Die Geometrie des dabei entfernten Bereichs der Schaufel 10' braucht nicht erhalten zu bleiben, weil sie nicht abgetastet werden muss und für das Erzeugen eines CAD-Modells für das Einsatzstück 23 nicht benötigt wird. Weil die Geometrie nicht benötigt wird, können auch sehr komplexe Schnittlinien 21 gewählt werden.

Die Geometrie des Einsatzstückes 23 berücksichtigt alle Informationen, welche die Deformation betreffen (äussere und innere Kontur, innere Kühlstruktur etc.). In jedem Fall ist kein Reverse-Engineering-Schritt notwendig, um das CAD-Modell für das Einsatzstück 23 zu erzeugen. Gleichwohl kann die Geometrie des Einsatzstückes 23 durch CAD-Modelling modifiziert werden bei speziellen Beschädigungen, oder um spezielle Anforderungen (Design-Upgrade, neue Kühlungsstruktur etc.) erfüllen zu können.

Das Einsatzstück 23 wird nach den erstellten Zeichnungen angefertigt. Dies kann durch Giessen, additive Fertigungsverfahren oder ein maschinelles Bearbeitungsverfahren wie Fräsen oder eine elektrochemische Bearbeitung geschehen. Vorzugsweise wird ein additives Fertigungsverfahren, zum Beispiel selektives Laser-Schmelzen, eingesetzt.

Die Geometrie oder geometrische Einzelheiten des Einsatzstückes 23 (zum Beispiel Kühlrippen auf der inneren Kontur oder Kühllöcher) können auch im Rahmen einer zusätzlichen Nachbearbeitung erzeugt werden. Hierdurch können geometrische Strukturen beziehungsweise Einzelheiten realisiert werden, die sich ansonsten im Rahmen des Herstellungsprozesses (zum Beispiel additives Fertigungsverfahren, wie Rapid Manufacturing) nicht realisieren liessen. Für diese Nachbearbeitung muss an den entsprechenden Stellen zusätzliches Material beziehungsweise ein Übermass vorgesehen werden.

Gemäss Fig. 7 wird das angefertigte Einsatzstück 23 dann in den entsprechenden Ausschnitt 22 im Bauteil 10' eingefügt und mit dem Bauteil 10' stoffschlüssig verbunden. Dafür kann manuelles oder automatisches Schweissen oder Hochtemperatur-Löten eingesetzt werden. Schliesslich kann nach dem Verbinden eine Rekonturierung durchgeführt werden, um eine ebenmässige oder geänderte Kontur des reparierten Bauteils zu erzielen.

Das Verfahren gemäss der Erfindung zeichnet sich insgesamt durch folgende charakteristische Eigenschaften und Vorteile aus:
- Die vollständige Information des nominalen ersten CAD-Modells ist im zweiten CAD-Modell des deformierten Bauteils enthalten (äussere Kontur und innere Kühlungsstruktur).
- Die Zeichnung für das Einsatzstück beziehungsweise Ersatzstück wird aus dem zweiten CAD-Modell des deformierten Bauteils abgeleitet; dazu wird lediglich die Festlegung einer Schnittlinie benötigt, nicht jedoch ein Reverse Engineering.
- Im CAD-Datensatz sind Veränderungen in der Innen- und Aussenkontur, der inneren Kühlungsstruktur sowie Veränderungen in der Wandstärke enthalten.
- Das Verfahren kann im Rahmen der herkömmlichen CAD-Software durchgeführt werden. Spezielle Software beziehungsweise Schnittstellen werden nicht benötigt.
- Die Erzeugung der CAD-Daten und des CAD-Modells für das Einsatzstück benötigen nur einen geringen Aufwand.
- Generell ist kein Reverse Engineering notwendig.
- Ein Vergleich zwischen der gesamten nominalen und der aktuellen Geometrie des Bauteils ist nicht notwendig. Eine Beschränkung auf den Teil des Bauteils, in welchem die Reparatur bzw. das Upgrade erfolgen soll, ist ausreichend.
- Die Geometrie des entfernten Bauteilbereichs muss nicht aufbewahrt werden, da ein Abtasten dieses Bereichs für die Erstellung der Zeichnung beziehungsweise eines entsprechenden Datensatzes nicht notwendig ist. Da der Bauteilbereich aus diesem Grund nicht in einem Stück entfernt werden muss, können zur Entfernung unterschiedliche Verfahren eingesetzt werden.
- Aus dem gleichen Grund können komplexere Schnittlinien verwendet und eine erhöhte Flexibilität im Verfahren erreicht werden.
- Aufgrund der hohen Genauigkeit des Verfahrens benötigt das durch additive Fertigungsverfahren oder maschinelle (spanende) Bearbeitung hergestellte Einsatzstück keine individuelle Anpassung und keine oder nur sehr wenig Nachbearbeitung.
- Giessverfahren haben grosse Herstellungstoleranzen. Daher benötigen gegossene Einsatzstücke einen adaptiven Bearbeitungsschritt, wenn beim stoffschlüssigen Verbinden eine enge Spalttoleranz erforderlich ist. Beim manuellen Schweissen ist ein solcher adaptiver Bearbeitungsschritt nicht notwendig, jedoch notwendigerweise beim Hochtemperatur-Löten wegen der Erzeugung des Kapillareffekts für das Lot.
- Die vorgestellte Lösung ist flexibel und kostengünstig, so dass sie für die Definition und Optimierung der Schnittlinie, der Verbindungsmethoden und Fixierung der Einsatzstücke eingesetzt werden kann. Die Geometrie der Schnittlinie kann bei neu erzeugten CAD-Daten leicht verändert werden. Es können aber auch komplexe Schnittlinien, die nicht durch irgendeinen Bearbeitungsprozess eingeschränkt sind, für Versuche modelliert werden. Mit einem additiven Fertigungsverfahren können leicht verschiedene Geometrien für Versuche erzeugt werden (sowohl ein Abschnitt des Bauteils mit dem Ausschnitt wie auch das Einsatzstück). Versuche mit verschiedenen Schnittlinien wie auch mit verschiedenen Verbindungsmethoden können durchgeführt werden, und nachher können die mechanischen Eigenschaften wie LCF (Low Cycle Fatigue), TMF (Thermo-Mechanical Fatigue) und Zeitstandsverhalten z.B. durch Thermoschock-Tests, Zugversuch usw. getestet werden.

Selbstverständlich ist die Erfindung nicht auf das beschriebene Ausführungsbeispiel beschränkt. Sie ist sowohl anwendbar auf modular gebaute Komponenten jeglicher Art, sowie auf monolithische und hybride Komponenten.

### BEZUGSZEICHENLISTE

- 10,10': Bauteil, z. B. Schaufel einer Gasturbine
- 11: Schaufelfuss
- 12: Plattform
- 13: Schaufelblatt
- 14: Hinterkante
- 15: Vorderkante
- 16: Schaufelspitze
- 17: Kühlloch
- 18: Beschädigung
- 19: Abtastvorrichtung (mechanisch und/oder optisch)
- 20: Auswerteeinheit
- 21: Schnittlinie
- 22: Ausschnitt
- 23: Einsatzstück
- M1,M2: CAD-Modell

## Patentansprüche

1. Verfahren zum Reparieren und/oder Überarbeiten eines Bauteils (10, 10'), vorzugsweise einer Gasturbine, insbesondere einer Schaufel (10, 10'), welches Bauteil während des Betriebs deformiert worden ist, **dadurch gekennzeichnet, dass** ein erstes nominales CAD-Modell (M1) des nichtdeformierten Bauteils (10) bereitgestellt wird, dass das deformierte Bauteil (10') vermessen wird, dass das erste CAD-Modell (M1) mithilfe der am deformierten Bauteil (10') ermittelten Daten durch Morphing in ein zweites CAD-Modell (M2) des deformierten Bauteils (10') überführt wird, dass im zweiten CAD-Modell (M2) eine Schnittlinie (21) festgelegt wird, welche in dem Bauteil (10') einen Ausschnitt (22) bestimmt, sowie ein in den Ausschnitt (22) einsetzbares Einsatzstück (23), dass nach Massgabe der Schnittlinie (21) ein Ausschnitt (22) in das Bauteil (10') eingebracht wird, dass nach Massgabe der Schnittlinie (21) ein Einsatzstück (23) zum Einsetzen in den Ausschnitt (22) angefertigt wird, dass das angefertigte Einsatzstück (23) in den Ausschnitt (22) eingesetzt wird, und dass das eingesetzte Einsatzstück (23) mit dem Bauteil (10') stoffschlüssig verbunden wird.

2. Verfahren nach Anspruch 1, **dadurch gekennzeichnet, dass** das Bauteil (10') eine Beschädigung (18) und/oder einen für ein Upgrade vorgesehenen Bereich aufweist, und dass die Beschädigung (18) bzw. der für das Upgrade vorgesehene Bereich mit dem Einbringen des Ausschnittes (22) in das Bauteil (10') aus dem Bauteil (10') entfernt wird.

3. Verfahren nach Anspruch 1 oder 2, **dadurch gekennzeichnet, dass** das deformierte Bauteil (10') in seiner Gesamtheit oder anhand weniger Referenzpunkte durch ein zerstörungsfreies Verfahren vermessen wird.

4. Verfahren nach Anspruch 3, **dadurch gekennzeichnet, dass** das deformierte Bauteil (10') in einem dreidimensionalen äusserlichen Abtastprozess mechanisch und/oder optisch abgetastet wird.

5. Verfahren nach Anspruch 4, **dadurch gekennzeichnet, dass** auch die innere Struktur des deformierten Bauteils (10'), insbesondere durch CT- oder Ultraschall-Verfahren, zerstörungsfrei abgetastet oder anhand weniger Referenzpunkte ermittelt wird, und dass das zweite CAD-Modell (M2) neben der Deformation der äusseren Kontur des Bauteils (10') auch Deformationen der inneren Struktur des Bauteils (10') sowie Deformationen allfälliger Kühllöcher (17) berücksichtigt.

6. Verfahren nach Anspruch 5, **dadurch gekennzeichnet, dass** das zweite CAD-Modell (M2) zusätzlich auch Änderungen durch Materialverlust, insbesondere Änderungen der Dicke von Wänden im Bauteil (10'), berücksichtigt.

7. Verfahren nach einem der Ansprüche 1 bis 6, **dadurch gekennzeichnet, dass** der Ausschnitt (22) durch ein maschinelles Bearbeitungsverfahren, insbesondere durch Funkenerodieren (EDM), in das Bauteil (10') eingebracht wird.

8. Verfahren nach einem der Ansprüche 1 bis 7, **dadurch gekennzeichnet, dass** das Einsatzstück (23) eine von der Geometrie des aus dem Ausschnitt (22) entfernten Teils abweichende Geometrie aufweist.

9. Verfahren nach einem der Ansprüche 1 bis 8, **dadurch gekennzeichnet, dass** in der Geometrie des Einsatzstückes (23) alle zugehörigen inneren und äusseren Deformationen des Bauteils (10') enthalten sind.

10. Verfahren nach einem der Ansprüche 1 bis 9, **dadurch gekennzeichnet, dass** zur Anfertigung des Einsatzstückes (23) auf der Basis der Schnittlinie (21) ein CAD-Modell erstellt wird, und dass das Einsatzstück (23) nach Massgabe des erstellten CAD-Modells, insbesondere durch Giessen, additive Fertigungsverfahren oder ein maschinelles Bearbeitungsverfahren wie Fräsen oder elektrochemische Bearbeitung, angefertigt wird.

11. Verfahren nach einem der Ansprüche 1 bis 10, **dadurch gekennzeichnet, dass** das Einsatzstück (23) an vorgegebenen Stellen mit Übermass angefertigt wird, und dass das Einsatzstück (23) nach dem Anfertigen einer Nachbearbeitung unterzogen wird.

12. Verfahren nach einem der Ansprüche 1 bis 11, **dadurch gekennzeichnet, dass** das eingesetzte Einsatzstück (23) durch automatisches oder manuelles Schweissen mit dem Bauteil (10') stoffschlüssig verbunden wird.

13. Verfahren nach einem der Ansprüche 1 bis11, **dadurch gekennzeichnet, dass** das eingesetzte Einsatzstück (23) durch Hochtemperatur-Löten mit dem Bauteil (10') stoffschlüssig verbunden wird.

14. Verfahren nach einem der Ansprüche 1 bis 13, **dadurch gekennzeichnet, dass** das Bauteil (10') nach dem Einsetzen und stoffschlüssigen Verbinden des Einsatzstückes (23) hinsichtlich der äusseren Kontur nachbearbeitet wird.

## Claims

1. Method for repairing and/or upgrading a component (10, 10'), preferably of a gas turbine, especially a blade (10, 10'), which component has been deformed during operation, **characterized in that** a first nominal CAD model (M1) of the non-deformed component (10) is made available, **in that** the deformed component (10') is measured, **in that** the first CAD model (M1), with the aid of the data determined on the deformed component (10'), is transformed into a second CAD model (M2) of the deformed component (10') by morphing, **in that** a cutting line (21), which determines a cut-out (22) in the component (10'), and also an insert piece (23), which can be inserted in the cut-out (22), are established in the second CAD model (M2), **in that** a cut-out (22) is introduced into the component (10') in accordance with the cutting line (21), **in that** an insert piece (23) for inserting in the cut-out (22) is manufactured in accordance with the cutting line (21), **in that** the manufactured insert piece (23) is inserted in the cut-out (22), and **in that** the inserted insert piece (23) is connected to the component (10') in a materially bonding manner.

2. Method as claimed in Claim 1, **characterized in that** the component (10') has damage (18) and/or a region which is intended for an upgrade, and **in that** the damage (18) or the region which is intended for the upgrade is removed from the component (10') by introducing a cut-out (22) into the component (10').

3. Method as claimed in Claim 1 or 2, **characterized in that** the deformed component (10') is measured in its entirety, or based on a few reference points, by means of a non-destructive method.

4. Method as claimed in Claim 3, **characterized in that** the deformed component (10') is mechanically and/or optically scanned in a three-dimensional, external scanning process.

5. Method as claimed in Claim 4, **characterized in that** the internal structure of the deformed component (10') is also non-destructively scanned, especially by CT methods or ultrasonic methods, or determined on the basis of a few reference points, and **in that** in addition to the deformation of the external contour of the component (10') the second CAD model (M2) also takes into consideration deformations of the internal structure of the component (10') and also deformations of possible cooling holes (17).

6. Method as claimed in Claim 5, **characterized in that** the second CAD model (M2) additionally also takes into consideration changes as a result of material loss, especially changes in the thickness of walls in the component (10').

7. Method as claimed in Claims 1 to 6, **characterized in that** the cut-out (22) is introduced into the component (10') by means of a mechanical machining process, especially by means of spark erosion (EDM).

8. Method as claimed in one of Claims 1 to 7, **characterized in that** the insert piece (23) has a geometry which deviates from the geometry of the part which is removed from the cut-out (22).

9. Method as claimed in one of Claims 1 to 8, **characterized in that** all associated internal and external deformations of the component (10') are included in the geometry of the insert piece (23).

10. Method as claimed in one of Claims 1 to 9, **characterized in that** a CAD model is generated for the manufacture of the insert piece (23) on the basis of the cutting line (21), and **in that** the insert piece (23) is manufactured in accordance with the generated CAD model, especially by means of casting, additive manufacturing processes or a mechanical machining process, such as milling or electrochemical machining.

11. Method as claimed in one of Claims 1 to 10, **characterized in that** the insert piece (23) is manufactured oversized at prespecified points, and **in that** the insert piece (23) is subjected to aftermachining after manufacture.

12. Method as claimed in one of Claims 1 to 11, **characterized in that** the inserted insert piece (23) is connected to the component (10') in a materially bonding manner by means of automatic or manual welding.

13. Method as claimed in one of Claims 1 to 11, **characterized in that** the inserted insert piece (23) is connected to the component (10') in a materially bonding manner by means of high-temperature soldering.

14. Method as claimed in one of Claims 1 to 13, **characterized in that** the component (10') is aftermachined with regard to the external contour after the insertion and materially-bonding connection of the insert piece (23).

## Revendications

1. Procédé de réparation et/ou de traitement d'un composant (10, 10'), de préférence une turbine à gaz, en particulier une aube (10, 10'), lequel composant est déformé pendant le fonctionnement, **caractérisé en ce qu'**un premier modèle CAD nominal (M1) du composant non déformé (10) est fourni, **en ce que** le composant déformé (10') est mesuré, **en ce que** le premier modèle CAD (M1) est converti à l'aide des données obtenues à partir du composant déformé (10') par morphing en un deuxième modèle CAD (M2) du composant déformé (10'), **en ce que** dans le deuxième modèle CAD (M2) est établie une ligne de découpure (21) qui définit dans le composant (10') une découpure (22), ainsi qu'une pièce d'insertion (23) pouvant être insérée dans la découpure (22), **en ce qu'**en fonction de la ligne de découpure (21), une découpure (22) est pratiquée dans le composant (10'), **en ce qu'**en fonction de la ligne de découpure (21), une pièce d'insertion (23) est fabriquée pour l'insertion dans la découpure (22), **en ce que** la pièce d'insertion (23) est insérée dans la découpure (22), et **en ce que** la pièce d'insertion insérée (23) est assemblée par engagement par correspondance géométrique avec le composant (10').

2. Procédé selon la revendication 1, **caractérisé en ce que** le composant (10') présente un endommagement (18) et/ou une région nécessitant une remise en état, et **en ce que** l'endommagement (18) ou la région nécessitant une remise en état sont enlevés du composant (10') lors de la réalisation de la découpure (22) dans le composant (10').

3. Procédé selon la revendication 1 ou 2, **caractérisé en ce que** le composant déformé (10') est mesuré dans sa totalité ou à l'aide de quelques points de référence par un procédé sans destruction.

4. Procédé selon la revendication 3, **caractérisé en ce que** le composant déformé (10') est balayé mécaniquement et/ou optiquement dans un procédé de balayage extérieur tridimensionnel.

5. Procédé selon la revendication 4, **caractérisé en ce que** la structure interne du composant déformé (10'), est également balayée sans destruction, notamment au moyen d'un procédé CT ou à ultrasons, ou est déterminée au moyen de quelques points de référence, et **en ce que** le deuxième modèle CAD (M2) tient compte, en plus de la déformation du contour extérieur du composant (10'), également de déformations de la structure interne du composant (10') ainsi que de déformations éventuelles de trous de refroidissement (17).

6. Procédé selon la revendication 5, **caractérisé en ce que** le deuxième modèle CAD (M2) tient compte en outre également de variations dues à des pertes de matériau, notamment des variations de l'épaisseur de parois dans le composant (10').

7. Procédé selon l'une quelconque des revendications 1 à 6, **caractérisé en ce que** la découpure (22) est pratiquée dans le composant (10') par un procédé d'usinage par machine, notamment par électroérosion (EDM).

8. Procédé selon l'une quelconque des revendications 1 à 7, **caractérisé en ce que** la pièce d'insertion (23) présente une géométrie s'écartant de la géométrie de la pièce enlevée de la découpure (22).

9. Procédé selon l'une quelconque des revendications 1 à 8, **caractérisé en ce que** toutes les déformations intérieures et extérieures associées du composant (10') sont contenues dans la géométrie de la pièce d'insertion (23).

10. Procédé selon l'une quelconque des revendications 1 à 9, **caractérisé en ce que** pour la fabrication de la pièce d'insertion (23), on crée un modèle CAD sur la base de la ligne de découpure (21), et **en ce que** la pièce d'insertion (23) est fabriquée en fonction du modèle CAD créé, notamment par moulage, par un procédé de fabrication additif ou un procédé d'usinage par machine tel que le fraisage ou l'usinage électrochimique.

11. Procédé selon l'une quelconque des revendications 1 à 10, **caractérisé en ce que** la pièce d'insertion (23) est fabriquée en des endroits prédéfinis avec un surdimensionnement et **en ce que** la pièce d'insertion (23) est soumise à un post-usinage après sa fabrication.

12. Procédé selon l'une quelconque des revendications 1 à 11, **caractérisé en ce que** la pièce d'insertion insérée (23) est assemblée par engagement par correspondance géométrique par soudage automatique ou manuel au composant (10').

13. Procédé selon l'une quelconque des revendications 1 à 11, **caractérisé en ce que** la pièce d'insertion insérée (23) est assemblée par engagement par correspondance géométrique au composant (10') par brasage à haute température.

14. Procédé selon l'une quelconque des revendications 1 à 13, **caractérisé en ce que** le composant (10') est post-usiné sur son contour extérieur après l'insertion et l'assemblage par engagement par correspondance géométrique de la pièce d'insertion (23).
